# EUROPEAN PATENT SPECIFICATION

(11) **EP 3 546 252 B1**
(45) Date of publication and mention of the grant of the patent: **23.09.2020**
(21) Application number: 19160607.8
(22) Date of filing: 04.03.2019
(51) Int. Cl.: B60C 13/00

(54) **TYRE**
REIFEN
PNEUMATIQUE

(30) Priority: 26.03.2018 JP 2018058490
(43) Date of publication of application: 02.10.2019
(73) Proprietor: Sumitomo Rubber Industries, Ltd., Kobe-shi, Hyogo-ken 651-0072 (JP)
(72) Inventor: NAKAJIMA, Koichi, Kobe-shi, Hyogo 651-0072 (JP)
(74) Representative: Manitz Finsterwald Patent- und Rechtsanwaltspartnerschaft mbB

(56) References cited:
- EP-A1- 2 740 613
- JP-A- 2008 273 505
- JP-B2- 3 007 825
- US-A1- 2011 253 278

## Description

### Technical Field

The present invention relates to a tyre having improved legibility of a concave mark.

### Background Art

on a surface of at least one of the sidewall portions of the tyre, one or more marks which are letters, symbols, and the like indicating the manufacturer name, brand name, size, and the like of the tyre are formed. In order to improve the legibility of the marks, they are usually formed in a convex shape which is one step higher than the surface of the sidewall portion.

JP 3007825 B2 and US 2011/0253278 A1 each disclose a tyre according to the preamble of claim 1.

JP 2008-273505 A and EP 2 740 613 A1 each disclose examples of abstract sidewall markings that may be provided in addition to the letters and symbols described above.

### Summary of the Invention

However, convex marks have a problem of large air resistance.

Therefore, in recent years, there has been a demand that the marks are formed in a concave shape recessed from the surface of the sidewall portion. However, the concave marks are formed to be shallow, therefore, they have poor legibility than the convex marks. Further, in a tyre meridian section, the surface of the sidewall portion is convexly curved. Thereby, when bottom surfaces of the marks are flat, depending on the placement position, the bottom surfaces face downward or upward, therefore, the legibility tends to be further deteriorated.

Note that Japanese Unexamined Patent Publication No. 2013-129233 has proposed improving legibility by disposing rubber having a different color on inner surfaces of the concave marks. However, the use of the rubber having the different color causes an increase in the types of rubber and an increase in the number of process by attaching the rubber, therefore, it is possible that the cost is increased.

An object of the present invention is to provide a tyre capable of improving the legibility of concave marks without using rubber having a different color and the like.

Claim 1 provides a tyre according to the present invention.

In an embodiment of the invention, it is preferred that the section line extends on the surface of each mark in a tyre circumferential direction or diagonally.

In an embodiment of the invention, it is preferred that a depth of the section line from the reference surface is constant.

In an embodiment of the invention, it is preferred that the section line is a straight line or an arcuate curved line.

In an embodiment of the invention, it is preferred that each of the first surface portion and the second surface portion is a flat surface or a concave or convex curved surface.

Further, when the section line extends diagonally, for example, the first surface portion and the second surface portion are inclined in opposite directions with respect to both a tyre radial direction and the tyre circumferential direction. Thereby, it is possible that effects of both cases where the section line extends in the tyre circumferential direction and where the section line extends in the tyre radial direction are exerted, therefore, it is possible that the legibility is further improved.

### Brief Description of the Drawings

Fig. 1 is a partial perspective view of a tyre according to an embodiment of the present invention.
Fig. 2 is an enlarged partial perspective view of marks.
Fig. 3A is a front view of one of the marks.
Fig. 3B is a cross-sectional view of the one of the marks taken along A-A line of Fig. 3A.
Fig. 4A is a front view of one of the marks according to another embodiment.
Fig. 4B a cross-sectional view of the one of the marks according to another embodiment taken along B-B line of Fig. 4A.
Fig. 5A is a diagram illustrating a diagonal line.
Fig. 5B is a diagram illustrating a diagonal line.

### Description of the Preferred Embodiment

An embodiment of the present invention will now be described below in detail.

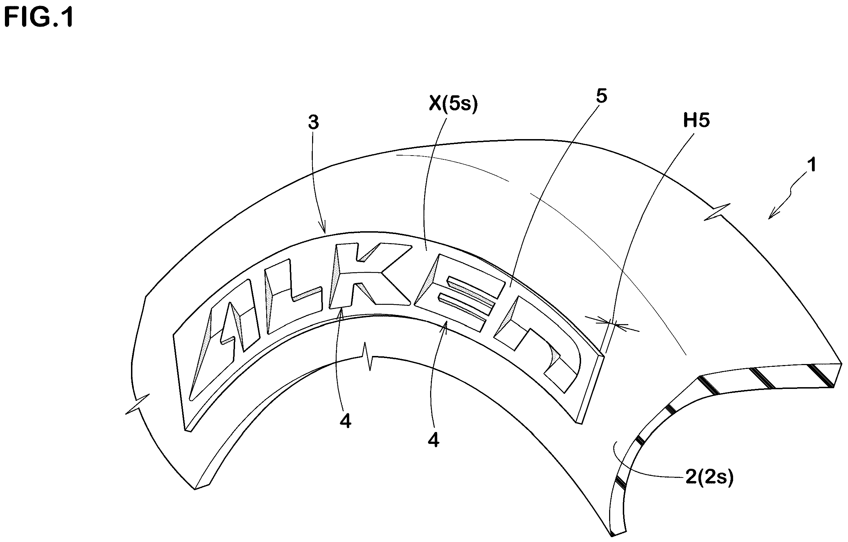

As shown in Fig. 1, a tyre 1 in this embodiment is provided with one or more mark indicating portions 3 in at least one of sidewall portions 2.

Each of the mark indicating portions 3 is provided with a reference surface (x) provided on a surface (2s) of a respective one of the sidewall portions 2 and one or more marks 4 formed on the reference surface (x) in a concave manner. According to claim 1, each of the mark indicating portions 3 is provided with a base portion 5 which projects stepwise from the surface (2s) of a respective one of the sidewall portions 2 at a constant height (H5) (that is, a top surface of the base portion is not inclined with respect to the surface (2s)) and a surface (5s) of the base portion 5 forms the reference surface (x).

Each of the marks 4 is a letter, a symbol, a figure, and the like for representing the manufacturer name, brand name, size, and the like of the tyre, and in this embodiment, a case is shown in which a brand name consisting of a plurality of the marks 4 is formed on the reference surface (x).

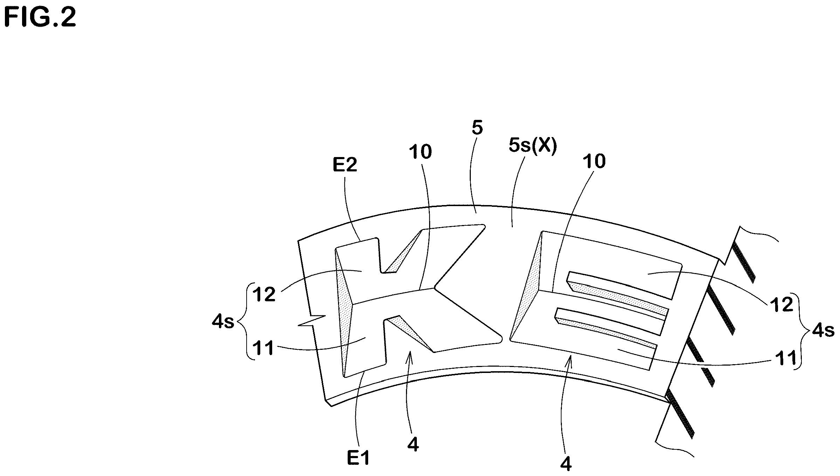

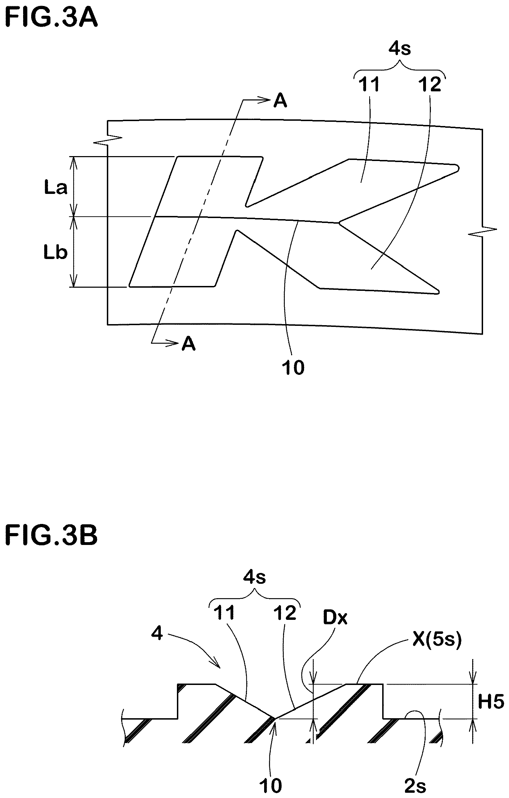

As shown in Figs. 2, 3A, and 3B, each of the marks 4 is formed in a concave shape recessed from the reference surface (x). A surface (4s) (bottom surface) of each of the marks 4 is divided into a first surface portion 11 and a second surface portion 12 by a section line 10 crossing the surface (4s).

The section line 10 in this embodiment has a constant depth (Dx) from the reference surface (x). It is preferred that the depth (Dx) is equal to or less than the height (H5) of the base portion 5 from the surface (2s) of a respective one of the sidewall portions 2 from the point of view of securing strength of the sidewall portions 2. Note that the depth (Dx) may vary in a length direction of the section line 10. In this case, it is preferred that the section line 10 is formed in an arcuate shape in which the depth (Dx) is decreased gradually and smoothly from a center in the length direction toward both ends thereof.

The section line 10 in this embodiment extends in a tyre circumferential direction. Specifically, the section line 10 is curved so as to extend in an arc shape centered on an axis of the tyre. In particular, it is preferred that the section lines 10 of a plurality of the marks 4 which is arranged within one mark indicating portion 3 are positioned on one circumferential line around the axis of the tyre.

As shown in Fig. 3A, in a case where the section line 10 extends in the tyre circumferential direction, in a front view, it is preferred that a distance (La) in a tyre radial direction between an outermost end in the tyre radial direction of each of the marks 4 and the section line 10 thereof is in a range of from 0.8 to 1.2 times a distance (Lb) in the tyre radial direction between an innermost end in the tyre radial direction of each of the marks 4 and the section line 10 thereof. If it is out of this range, the balance between the first surface portion 11 and the second surface portion 12 is deteriorated, therefore, design property is deteriorated.

Each of the first surface portion 11 and the second surface portion 12 is inclined in a direction in which a depth thereof from the reference surface (x) is decreased as it goes away from the section line 10.

when the section line 10 extends in the tyre circumferential direction, the first surface portion 11 and the second surface portion 12 are inclined in opposite directions to each other (upward and downward) with respect to the tyre radial direction. Thereby, irrespective of the positions on the surfaces (2s) of the sidewall portions 2 at which the marks 4 are arranged, the surfaces (4s) of the marks 4 reflect light, therefore, it is possible that the legibility is increased. Moreover, each of the surfaces (4s) is inclined in a V-shape, therefore, a change is given to the appearance of the marks 4, thereby, the stereoscopic effect is increased. Therefore, it is possible that the design property and the legibility are improved.

Each of the first surface portion 11 and the second surface portion 12 can be formed as a flat surface. However, it can also be formed as a curved surface curved in a concave shape or a convex shape, for example.

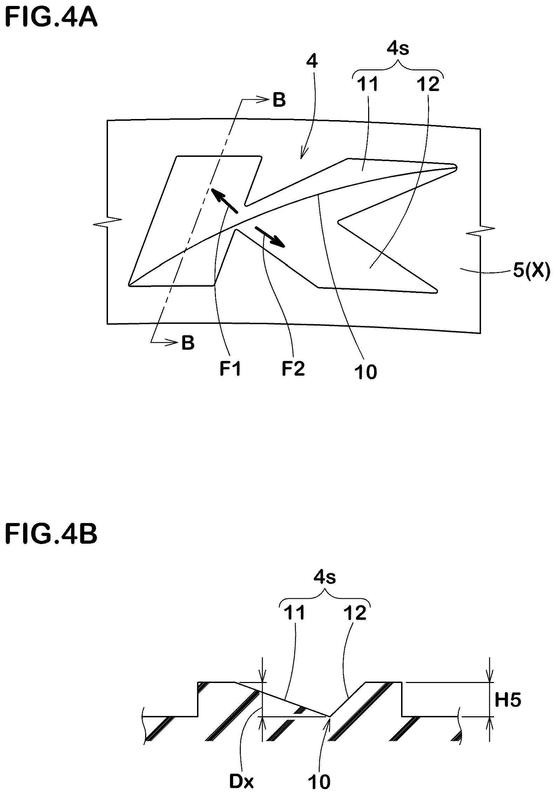

Fig. 4A is a front view of one of the marks 4 in another embodiment and Fig. 4B is a cross-sectional view thereof taken along B-B line. In this example, when the one of the marks 4 is viewed from the front, the section line 10 extends diagonally on the surface (4s) of the one of the marks 4.

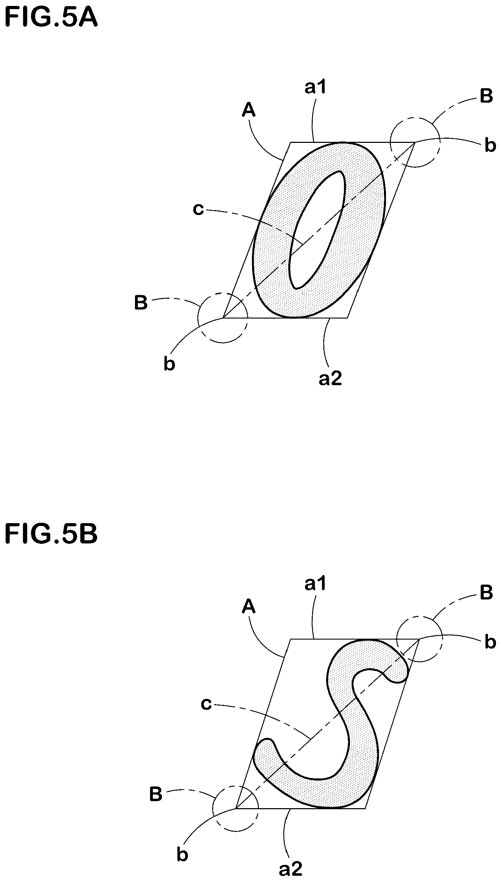

Here, "extending diagonally" is defined as follows. As shown in Figs. 5A and 5B, when the smallest parallelogram among parallelograms (including the rectangles) surrounding one of the marks 4 is defined as a parallelogram (A), extending diagonally means extending in a direction so as to connect between diagonal neighborhoods (B) of the parallelogram (A). Here, the parallelogram (A) includes an upper side (a1) and a lower side (a2) extending in the tyre circumferential direction. Further, each of the diagonal neighborhoods (B) means a range in which a distance from a respective one of diagonals (b) of the parallelogram (A) is 10% or less of a length of a diagonal line (c). It is preferred that the section line 10 extends in a direction so as to connect between the diagonals (b). As shown in Fig. 4A, the section line 10 in this embodiment is formed in an arcuate curved line in a front view of each of the marks 4. However, it can also be formed in a straight line.

In a case where the section line 10 is inclined toward upper right as in this embodiment (Fig. 4A), the first surface portion 11 is inclined toward an upper left direction F1 and the second surface portion 12 is inclined toward a lower right direction F2. In other words, the first surface portion 11 and the second surface portion 12 are inclined with respect to both the tyre circumferential direction and the tyre radial direction.

Therefore, irrespective of the positions on the surfaces (2s) of the sidewall portions 2 at which the marks 4 are arranged, the surfaces (4s) of the marks 4 reflect light, therefore, it is possible that the legibility is increased. Further, the first surface portion 11 and the second surface portion 12 have components that are inclined in opposite directions to each other with respect to the tyre circumferential direction, therefore, the reflecting surfaces appear changing and sparkling when the tyre rotates. Thereby, it is possible that the visibility is further improved as compared with the case where the section line 10 extends in the tyre circumferential direction.

Although not shown, in a cross section taken orthogonal to the section line 10, it is preferred that an inclination angle of the first surface portion 11 with respect to the reference surface (x) is the same as an inclination angle of the second surface portion 12 with respect to the reference surface (x) from a point of view of the design property. Further, from the point of view of the design property, it is preferred that a ratio (J1/J2) between an area (J1) of the first surface portion 11 and an area (J2) of the second surface portion 12 is in a range of from 0.7 to 1.3 when the surface (4s) is viewed from the front.

In each of the mark indicating portions 3, it is possible that the marks 4 are directly formed on the surface (2s) of a respective one of the sidewall portions 2 without having the base portion 5 formed thereon. In this case, the surface (2s) of the sidewall portion 2 forms the reference surface (x). In this case, in order to distinguish the mark indicating portions 3 from other portions, it is preferred that the surface (2s) of each of the sidewall portions 2 is provided with a rib and the like having a small height and surrounding each of the mark indicating portions 3.

while detailed description has been made of the tyre as especially preferred embodiments of the present invention, the present invention can be embodied in various forms without being limited to the illustrated embodiments.

### Working Examples (Examples)

Tyres provided with the mark indicating portions on the surface of the sidewall portions were made by way of test according to the specifications listed in Table 1, and then the legibility of the marks was compared.

In Reference 1, no section line is provided and each of the surfaces (bottom surfaces) of the marks are formed as a flat surface.

In Example 1, the section line extends in the tyre circumferential direction, therefore, the first surface portion and the second surface portion are inclined in the tyre radial direction in a V-shape. Further, in Example 2, in each of the marks, the section line extends diagonally, therefore, the first surface portion is inclined in the direction F1 and the second surface portion is inclined in the direction F2 (shown in Fig. 4A) so as to form a V-shape. Note that a depth of each of the marks of the Reference 1 and each of the depths (Dx) of the section lines in the Examples 1 and 2 are equal to the height (H5) of each of the base portions. Further, in a plan view, each of the section lines is formed in an arcuate curved line. Furthermore, in each of the marks, the first surface portion and the second surface portion which are divided by the section line are each formed as a flat surface.

The legibility was evaluated by a visual observation and the evaluation is indicated by an index based on the Reference 1 being 100, wherein a larger numerical value is better.

**Table 1**

| | Ref.1 | EX. 1 | Ex.2 |
|---|---|---|---|
| < Mark indicating portion > | | | |
| Base portion | *Present* | | |
| Mark | *Present* (concave) | | |
| ▪ Presence or Absence of Section line | Absence | Presence | |
| ▪ Direction of Section line | - | Tyre circumferential direction | diagonal direction |
| ▪ Inclination of Surface | Not inclined | Inclined (v-shape) | |
| Legibility | 100 | 110 | 115 |

As shown in Table 1, it was confirmed that the tyres as the Examples showed excellent legibility of the marks.

## Claims

1. A tyre (1) comprising a sidewall portion (2) provided with a mark indicating portion (3) having one or more marks (4) which are letters and symbols indicating the manufacturer name, brand name, size, and the like of the tyre, wherein
the mark indicating portion (3) comprises a reference surface (x) provided on a surface (2s) of the sidewall portion (2) and the one or more marks (4) formed on the reference surface (x) in a concave manner,
wherein the mark indicating portion (3) is provided with a base portion (5) projecting from the surface (2s) of the sidewall portion (2) at a constant height (H5), and a surface (5s) of the base portion (5) forms the reference surface (x),
**characterized in that** the
bottom surface (4s) of each mark (4) that forms the letter or symbol is divided into a first surface portion (11) and a second surface portion (12) by a section line (10) crossing the surface of each mark (4), and
each of the first surface portion (11) and the second surface portion (12) is inclined in a direction in which a depth thereof from the reference surface (x) is decreased as it goes away from the section line (10).

2. The tyre (1) according to claim 1, wherein
the section line (10) extends on the surface of each mark (4) in a tyre circumferential direction.

3. The tyre (1) according to claim 1, wherein
the section line (10) extends diagonally on the surface of each mark (4).

4. The tyre (1) according to any one of claims 1 to 3, wherein
a depth of the section line (10) from the reference surface (x) is constant.

5. The tyre (1) according to any one of claims 1 to 4, wherein
the section line (10) is a straight line or an arcuate curved line.

6. The tyre (1) according to any one of claims 1 to 5, wherein
each of the first surface portion (11) and the second surface portion (12) is a flat surface or a concave or convex curved surface.

## Patentansprüche

1. Reifen (1), der einen Seitenwandabschnitt (2) umfasst, der mit einem Markierungsanzeigeabschnitt (3) versehen ist, der eine oder mehrere Markierungen (4) aufweist, welche Buchstaben und Symbole sind, die den Herstellernamen, den Markennamen, die Größe und dgl. des Reifens anzeigen, wobei
der Markierungsanzeigeabschnitt (3) eine Bezugsoberfläche (x), die an einer Oberfläche (2s) des Seitenwandabschnitts (2) vorgesehen ist, und die eine oder mehreren Markierungen (4) umfasst, die auf der Bezugsoberfläche (x) in einer konkaven Weise gebildet sind,
wobei der Markierungsanzeigeabschnitt (3) mit einem Basisabschnitt (5) versehen ist, der von der Oberfläche (2s) des Seitenwandabschnitts (2) mit einer konstanten Höhe (H5) vorsteht und eine Oberfläche (5s) des Basisabschnitts (5) die Bezugsoberfläche (x) bildet,
**dadurch gekennzeichnet, dass**
die Grundfläche (4s) von jeder Markierung (4), welche einen Buchstaben oder ein Symbol bildet, durch eine Trennlinie (10), welche die Oberfläche jeder Markierung (4) quert, in einen ersten Oberflächenabschnitt (11) und einen zweiten Oberflächenabschnitt (12) aufgeteilt ist, und
ein jeder von dem ersten Oberflächenabschnitt (11) und dem zweiten Oberflächenabschnitt (12) in eine Richtung geneigt ist, in welcher sich seine Tiefe von der Bezugsoberfläche (x) aus mit zunehmender Entfernung von der Trennlinie (10) verringert.

2. Reifen (1) nach Anspruch 1, wobei sich die Trennlinie (10) auf der Oberfläche von jeder Markierung (4) in einer Reifenumfangsrichtung erstreckt.

3. Reifen (1) nach Anspruch 1, wobei sich die Trennlinie (10) diagonal auf der Oberfläche jeder Markierung (4) erstreckt.

4. Reifen (1) nach einem der Ansprüche 1 bis 3, wobei eine Tiefe der Trennlinie (10) von der Bezugsoberfläche (x) konstant ist.

5. Reifen (1) nach einem der Ansprüche 1 bis 4, wobei die Trennlinie (10) eine gerade Linie oder eine bogenförmige gekrümmte Linie ist.

6. Reifen (1) nach einem der Ansprüche 1 bis 5, wobei ein jeder von dem ersten Oberflächenabschnitt (11) und dem zweiten Oberflächenabschnitt (12) eine flache Oberfläche oder eine konkave oder konvex gekrümmte Oberfläche ist.

## Revendications

1. Pneumatique (1) comprenant une portion formant paroi latérale (2) dotée d'une portion d'indication de repère (3) ayant un ou plusieurs repères (4) qui sont des lettres ou des symboles indiquant le nom du fabricant, le nom de la marque, la taille, et similaires du pneumatique, dans lequel la portion d'indication de repère (3) comprend une surface de référence (x) prévue sur une surface (2s) de la portion formant paroi latérale (2) et lesdits un ou plusieurs repères (4) formés sur la surface de référence (x) d'une manière concave,
dans lequel la portion d'indication de repère (3) est dotée d'une portion de base (5) qui se projette depuis la surface (2s) de la portion formant paroi latérale (2) à une hauteur constante (H5), et une surface (5s) de la portion de base (5) forme la surface de référence (x),
**caractérisé en ce que**
la surface de fond (4s) de chaque repère (4) qui forme la lettre ou le symbole est divisée en une première portion de surface (11) et en une seconde portion de surface (12) par une ligne de coupe (10) qui croise la surface de chaque repère (4), et
chacune de la première portion de surface (11) et de la seconde portion de surface (12) est inclinée dans une direction dans laquelle une profondeur de celle-ci depuis la surface de référence (x) diminue au fur et à mesure de l'éloignement depuis la ligne de coupe (10).

2. Pneumatique (1) selon la revendication 1, dans lequel la ligne de coupe (10) s'étend sur la surface de chaque repère (4) dans une direction circonférentielle du pneumatique.

3. Pneumatique (1) selon la revendication 1, dans lequel la ligne de coupe (10) s'étend en diagonale sur la surface de chaque repère (4).

4. Pneumatique (1) selon l'une quelconque des revendications 1 à 3, dans lequel
une profondeur de la ligne de coupe (10) depuis la surface de référence (x) est constante.

5. Pneumatique (1) selon l'une quelconque des revendications 1 à 4, dans lequel
la ligne de coupe (10) est une ligne droite ou une ligne incurvée en forme d'arc.

6. Pneumatique (1) selon l'une quelconque des revendications 1 à 5, dans lequel
chacune de la première portion de surface (11) et de la seconde portion de surface (12) est une surface plane ou une surface incurvée concave ou convexe.
